# EUROPÄISCHE PATENTSCHRIFT

(11) **EP 3 763 550 B1**
(45) Veröffentlichungstag und Bekanntmachung des Hinweises auf die Patenterteilung: **27.04.2022**
(21) Anmeldenummer: 20179129.0
(22) Anmeldetag: 10.06.2020
(51) Int. Cl.: B60C 11/24, B60C 11/04

(54) **NUTZFAHRZEUGREIFEN**
COMMERCIAL VEHICLE TYRES
PNEUMATIQUES POUR VÉHICULES UTILITAIRES

(30) Priorität: 11.07.2019 DE 102019210243
(43) Veröffentlichungstag der Anmeldung: 13.01.2021
(73) Patentinhaber: Continental Reifen Deutschland GmbH, 30165 Hannover (DE)
(72) Erfinder: Kleffmann, Jens, 30419 Hannover (DE); Neuber, Cord-Christian, 30419 Hannover (DE); Fries, Volkmar, 30419 Hannover (DE); von Zobeltitz, Carsten, 30419 Hannover (DE); Härtwig, Andreas, 30419 Hannover (DE); Lehn, Michael, 30419 Hannover (DE); Faber, Andreas, 30419 Hannover (DE)
(74) Vertreter: Continental Corporation

(56) Entgegenhaltungen:
- EP-A1- 0 675 011
- EP-A1- 3 560 735

## Beschreibung

Die Erfindung betrifft einen Nutzfahrzeugreifen in Radialbauart mit einem Laufstreifen, welcher Umfangsrillen aufweist, deren Tiefe der vorgesehenen Profiltiefe entspricht, welche von zwei einander gegenüberliegenden Rillenflanken und einem diese verbindenden Rillengrund begrenzt sind und mit einer Anzahl von über ihre Umfangserstreckung verteilten, lokalen Profiltiefenindikatoren versehen sind, wobei zwei dieser Umfangsrillen schulterseitig verlaufende Umfangsrillen sind.

Es ist üblich und meist gesetzlich vorgeschrieben, in Laufstreifen von Nutzfahrzeugreifen in den Umfangsrillen als Profiltiefenindikatoren dienende Erhebungen, Vorsprünge oder dergleichen, insbesondere am Rillengrund, auszubilden, deren radiale Höhe gegenüber dem Rillengrund der gesetzlich vorgeschriebenen Mindestprofiltiefe entspricht. Üblich ist die Anordnung von mindestens sechs über die Umfangerstreckung der Umfangsrillen im Wesentlichen gleichmäßig verteilten Profiltiefenindikatoren. Um den Kraftstoffverbrauch von Kraftfahrzeugen, insbesondere Nutzfahrzeugen, zu reduzieren, werden zunehmend aerodynamische Optimierungsmaßnahmen an den Fahrzeugen getroffen, beispielsweise werden Verkleidungen, insbesondere Seitenverkleidungen, angebracht. Solche Maßnahmen an Fahrzeugen zur aerodynamischen Optimierung haben zur Folge, dass die Räder und damit auch die Fahrzeugreifen zu einem erheblichen Teil ihres Umfanges optisch abgedeckt sind. Dies ist beispielsweise bei Aufliegern übliche Praxis, bei Lastkraftwagen oder Zugmaschinen sind solche aerodynamischen Abdeckungen oder Abschirmungen in künftigen Fahrzeugkonzepten vorgesehen.

Die Kontrolle der aktuellen Profiltiefe eines Reifens erfolgt üblicherweise bei am Fahrzeug montiertem Rad, also ohne das Rad vom Fahrzeug zu demontieren. Da in Folge der aerodynamischen Verkleidungen nur kleine Teile des Reifenumfanges von außen sichtbar sind, ist die Möglichkeit der optischen Kontrolle der Reifenprofile stark eingeschränkt, da nicht sichergestellt ist, dass sich einer der gesetzlich vorgeschriebenen Profiltiefenindikatoren gerade am zugänglichen bzw. einsehbaren Bereich des Reifenumfanges befindet.

Die EP 3 560 735 A1, welche einen Stand der Technik nach Art 54(3) EPÜ darstellt, offenbart einen Nutzfahrzeugreifen mit einem Laufstreifen mit schulterseitigen Umfangsrillen, in welchen jeweils ein sich über den Laufstreifenumfang erstreckender, freistehender Steg ausgebildet ist, der die jeweilige schulterseitige Umfangsrille in einen laufstreifeninnenseitigen und einen laufstreifenaußenseitigen Rillenabschnitt teilt. Der Steg ist mit einer Anzahl von insbesondere gleichmäßig über den Umfang verteilten, den Steg in axialer Richtung durchsetzenden Aussparungen versehen. Jede Aussparung ist in radialer Richtung durch einen Boden begrenzt, welcher sich in der Oberfläche einer neben der Aussparung im laufstreifeninnenseitigen Rillenabschnitt ausgebildeten Erhebung fortsetzt. Die Erhebung bildet in Verbindung mit dem Boden der Aussparung einen Abriebindikator, welcher keinen oder kaum Einfluss auf die Rissbeständigkeit im Bereich der schulterseitigen Umfangsrille nimmt.

Aus der EP 0 836 955 A1 ist ein Reifen für Personenkraftwagen bekannt, welcher einen Laufstreifen mit einer breiten und entlang des Reifenzenits geradlinig in Umfangsrichtung umlaufenden Umfangsrille aufweist. Der Reifen wird derart vulkanisiert, dass er im vulkanisierten Zustand in seinem mittleren Laufstreifenbereich in Richtung zur zentralen Umfangsrille etwas "eingefallen" ist, sodass beim Unterdrucksetzen die größere Ausdehnung im Bereich der Umfangsrille eine für einen gleichmäßigen Abrieb vorteilhafte gleichmäßige Laufstreifenaußenkontur ergibt. Die zentrale Umfangsrille kann am Rillengrund mit einer Rippe versehen sein, die sich auf der Mittellinie der Umfangsnut befindet und über den Umfang durchgehend ausgebildet ist. Der äußere, obere Teil der Rippe kann aus einer farbigen Mischung bestehen, beispielsweise aus ästhetischen Zwecken oder aus Sicherheitszwecken, etwa zum Signalisieren der maximal zulässigen Verschleißgrenze für den Laufstreifen.

Der Erfindung liegt die Aufgabe zugrunde, bei einem Nutzfahrzeugreifen der eingangs genannten Art, insbesondere wenn dieser Reifen an Kraftfahrzeugen mit die Räder zum Teil abdeckenden Verblendungen oder Verkleidungen verwendet wird, auf einfache Weise eine zuverlässige Kontrolle der aktuellen Profiltiefe und des Erreichens der Mindestprofiltiefe zu ermöglichen.

Gelöst wird die gestellte Aufgabe erfindungsgemäß durch einen Nutzfahrzeugreifen der eingangs genannten Art, bei welchem zumindest am Rillengrund der schulterseitigen Umfangsrillen, seitliche Rillengrundabschnitte belassend, jeweils eine und über mindestens 90 % ihrer Umfangserstreckung verlaufende, einen weiteren Profiltiefenindikator bildende Rippe vorgesehen ist, welche in den Rillengrund übergehende Rippenflanken und an der Rippenoberfläche eine Indikatorfläche aufweist, wobei die lokalen Profiltiefenindikatoren Anbindungen der Rippe an zumindest eine der Rillenflanken sowie das Niveau der Indikatorfläche aufweisende Verbreiterungen der Rippe sind, wobei jene Umfangsrillen, auf deren Rillengrund eine derartige, einen weiteren Profiltiefenindikator bildende Rippe verläuft, eine Breite an der Laufstreifenperipherie von mindestens 8,0 mm aufweisen.

Bei erfindungsgemäß ausgeführten Nutzfahrzeugreifen ermöglicht die in den schulterseitigen Umfangsrillen ausgebildete, über mindestens 90 % ihrer Umfangserstreckung verlaufende, einen weiteren Profiltiefenindikator bildende Rippe eine einfache und zuverlässige Kontrolle der aktuellen Profiltiefe, ohne einen der lokalen Profiltiefenindikatoren ausfindig machen zu müssen. Die Anordnung der Rippe in den schulterseitigen Umfangsrillen ist besonders vorteilhaft, da jeweils die fahrzeugaußenseitig vorliegende schulterseitige Umfangsrille von außen gut einsehbar ist, auch bei Fahrzeugen mit aerodynamischen Vorrichtungen, wie Verkleidungen. Die Kombination einer umlaufenden Rippe als Profiltiefenindikator mit den über den Reifenumfang verteilten, durch ihre Anordnung sich von der Rippe zusätzlich abhebenden weiteren Profiltiefenindikatoren ermöglicht somit eine optimale und einfach durchzuführende Kontrolle der Profiltiefe.

Für eine gute Sichtbarkeit der Rippe bzw. ihrer Indikatorfläche ist es von Vorteil, wenn die Breite der Indikatorfläche 30 % bis 70 % der Breite der Umfangsrillen am Niveau der Indikatorfläche beträgt.

Bevorzugt befindet sich ferner die Indikatorfläche der Rippe zumindest am Niveau der gesetzlich vorgeschriebenen Mindestprofiltiefe, insbesondere auf diesem Niveau. Die Rippe kann daher in einer derartigen Höhe ausgeführt sein, dass sie bereits vor dem Erreichen der Mindestprofiltiefe einen weit fortgeschrittenen Abriebzustand signalisiert.

Bevorzugt ist ferner eine Ausführung, bei der die lokalen Profilindikatoren das Niveau der Mindestprofiltiefe wiedergeben, wobei in diesem Fall auch die Indikatorfläche der Rippe sich auf diesem Niveau befinden sollte.

Um die Kontrolle der Profiltiefe bzw. der Mindestprofiltiefe auf besonders gut sichtbare Weise zu ermöglichen, ist es vorteilhaft, wenn die lokalen Profilindikatoren jeweils lokale Anbindungen der Rippe an beide Rillenflanken sind und wenn die lokalen Profilindikatoren über 10,0 mm bis 30,0 mm der Umfangserstreckung der Umfangsrillen verlaufen. Vorteilhafterweise beträgt ferner in jeder Umfangsrille die Anzahl der lokalen Profilindikatoren zumindest sechs.

Bei einer weiteren bevorzugten Ausführung weist der Laufstreifen des Nutzfahrzeugreifens zumindest eine zwischen den schulterseitigen Umfangsrillen verlaufende mittlere Umfangsrille auf, welche analog zu den schulterseitigen Umfangsrillen ausgeführt ist.

Weitere Merkmale, Vorteile und Einzelheiten der Erfindung werden nun anhand der schematischen Zeichnung, die Ausführungsbeispiele darstellt, näher beschrieben.

Dabei zeigen
Fig. 1 einen Querschnitt im Bereich eines Laufstreifens eines Nutzfahrzeugreifens,
Fig. 2 einen Querschnitt einer schulterseitigen Umfangsrille des Laufstreifens in vergrößerter Darstellung und
Fig. 3 und Fig. 4 Querschnittdarstellungen von schulterseitigen Umfangsrillen mit Ausführungsvarianten von lokal ausgebildeten Profiltiefenindikatoren.

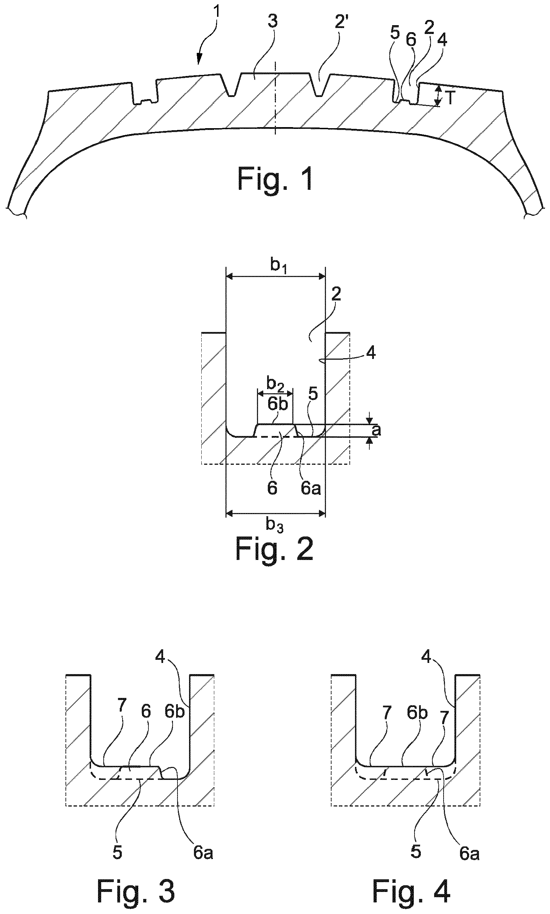

Fig. 1 zeigt im Querschnitt einen Laufstreifen 1 eines Nutzfahrzeugreifens in Radialbauart, welcher insbesondere ein Reifen für Busse oder LKWs ist, beispielsweise ein Reifen für die Lenkachse oder die Antriebsachse eines Lastkraftwagens. Der Nutzfahrzeugreifen kann ansonsten die üblichen, nicht dargestellten Bauteile, wie einen mehrlagigen Gürtelverband, eine Radialkarkasse, eine luftdichte Innenschicht, Seitenwände und Wulstbereiche mit Wulstkernen, Kernprofilen und Verstärkungslagen aufweisen.

Der in Fig. 1 gezeigte Laufstreifen 1 weist beispielhaft vier Umfangsrillen 2, 2' auf, zwei schulterseitige Umfangsrillen 2 und zwei im mittleren Bereich des Laufstreifens 1 verlaufende mittlere Umfangsrillen 2'. Die Umfangsrillen 2, 2' verlaufen beispielsweise geradlinig in Umfangsrichtung des Reifens, können jedoch auch in Zickzack- oder Wellenform verlaufen oder zickzack- oder wellenförmig verlaufende Abschnitte aufweisen. Bei weiteren möglichen Ausführungen sind die Umfangsrillen 2, 2' an der Laufstreifenperipherie mit geradlinig verlaufenden seitlichen Rillenkanten versehen, wobei ihr Rillengrund in Zickzack- oder Wellenform verläuft. Die Umfangsrillen 2, 2' gliedern den Laufstreifen 1 in Profilrippen 3, welche durch Querrillen, Schrägrillen, Einschnitte und dergleichen in Profilblöcke gegliedert sein können oder eine blockartige Struktur erhalten können.

Die schulterseitigen Umfangsrillen 2 weisen die Profilrippen 3 begrenzende, im Beispiel in radialer Richtung verlaufende Rillenflanken 4 und einen diese verbindenden Rillengrund 5 auf, welcher über Übergangsrundungen in die Rillenflanken 4 übergeht. Beim gezeigten Ausführungsbeispiel ist der Rillengrund 5, abgesehen von den Übergangsrundungen, flach gestaltet - im Querschnitt eine Gerade - kann jedoch auch U-förmig gerundet sein, und weist an seiner tiefsten Stelle eine in radialer Richtung ermittelte Tiefe T auf, die der vorgesehenen Profiltiefe entspricht, die bei Nutzfahrzeugreifen üblicherweise 8,0 mm bis 22,0 mm beträgt. An der Laufstreifenperipherie, zwischen den Rillenkanten der Rillenflanken 4, weisen die Umfangsrillen 2 eine Breite b₁ von mindestens 8,0 mm, insbesondere von 11,0 mm bis 20,0 mm, auf. Am Rillengrund 5 der beiden schulterseitigen Umfangsrillen 2 ist ferner jeweils eine entlang des Rillengrundes 5 und insbesondere über die gesamte Umfangserstreckung der Umfangsrillen 2 verlaufende, als Profiltiefenindikator dienende Rippe 6 ausgebildet, wobei seitlich der Rippe 6 Rillengrundabschnitte verbleiben. Die in Fig. 2 bis 4 radial innerhalb der Rippen 6 eingezeichneten, gestrichelten Linien verdeutlichen die Kontur des ansonsten vorhandenen, bis in die Tiefe T reichenden oder in dieser Tiefe T verlaufenden Rillengrundabschnittes. Jede Rippe 6 ist von zwei seitlichen Rippenflanken 6a, welche über Übergangsrundungen in den Rillengrund 5 übergehen, und an ihrer Oberfläche von einer parallel zur Laufstreifenperipherie orientierten Indikatorfläche 6b begrenzt, welche sich in einem Abstand a (Fig. 2) vom Rillengrund 5 bzw. von der tiefsten Stelle des Rillengrundes 5 befindet, welcher mindestens der gesetzlich vorgesehenen Mindestprofiltiefe entspricht. Die Breite der Rippe 6 entspricht bei der gezeigten Ausführung im Wesentlichen der Breite b₂ der Indikatorfläche 6b, wobei die Breite b₂ 30 % bis 70 % der Breite b₃ der schulterseitigen Umfangsrillen 2 am Niveau der Indikatorfläche 6b beträgt.

Zusätzlich zu dem am Rillengrund 5 in Umfangsrichtung umlaufenden, als Rippe 6 am Rillengrund 5 ausgeführten Profiltiefenindikator sind weitere Profiltiefenindikatoren 7 vorgesehen, die lokal begrenzte Profiltiefenindikatoren 7 sind, welche an beispielsweise mindestens sechs Stellen -je nach den gesetzlichen Vorgaben- in den Umfangsrillen 2 über den Reifenumfang verteilt angeordnet sind und an die Rippen 6 angebunden sind. Beispiele von Ausgestaltungen dieser Profiltiefenindikatoren 7 zeigen die Schnittdarstellungen in den Figuren 3 und 4. In Fig. 3 ist die Rippe 6 über einen kurzen Umfangsabschnitt, beispielsweise über 10,0 mm bis 30,0 mm, in Richtung zu einer der Rillenflanken 4 am Niveau ihrer Indikatorfläche 6b verbreitert und derart an die jeweilige Rillenflanke 4 angebunden. Bei der in Fig. 4 gezeigten Ausführung ist die Rippe 6 lokal über einen Umfangsabschnitt in Richtung zu beiden Rillenflanken 4 verbreitert und an beide Rillenflanken 4 angebunden. In diesen Figuren deuten gestrichelte Linien den ansonsten vorhandenen Rillengrund 5 sowie die sonstige Gestaltung der Rippe 6 an.

Die als Rippe 6 ausgebildeten Profiltiefenindikatoren können in den Umfangsrillen 2 ferner lokal an einzelnen Stellen unterbrochen sein, sollten jedoch zu zumindest 90 % über den Reifenumfang innerhalb der jeweiligen Umfangsrille 2 verlaufen.

Bei einer bevorzugten Ausführung befindet sich die Rippe 6 in der Mitte des Rillengrundes 5 bzw. im Wesentlichen in der Mitte des Rillengrundes 5, sie kann jedoch auch gegenüber der Mitte des Rillengrundes 5 seitlich versetzt sein. Auch über den Reifenumfang kann die Position der Rippe 6 am Rillengrund 5, bezüglich der Mitte des Rillengrundes 5, variieren.

Bei einer weiteren nicht dargestellten Variante ist zusätzlich in zumindest einer mittleren Umfangsrille am Rillengrund ein als Rippe ausgeführter Profiltiefenindikator vorgesehen. Die Rillenflanken von Umfangsrillen mit als Rippe ausgeführten Profiltiefenindikator am Rillengrund können auch unter spitzen Winkeln von insbesondere bis zu 10° zur radialen Richtung verlaufen oder überhaupt eine andere Ausgestaltung, etwa mit Abschnitten unterschiedlicher Winkelung zur radialen Richtung, aufweisen. An der Laufstreifenperipherie, zwischen den Rillenkanten der Rillenflanken an der Laufstreifenperipherie ermittelt, weisen Umfangsrillen, an deren Rillengrund eine einen weiteren Profiltiefenindikator bildende Rippe ausgebildet ist, eine Breite auf, die mindestens 8,0 mm beträgt.

Bevorzugt ist ferner eine Ausführung, bei welcher die Rippen über den Reifenumfang eine konstante Breite und Geometrie aufweisen. Bei alternativen Ausführungen können die Rippen auch eine variierende Breite und/oder eine variierende Geometrie aufweisen.

Darüber hinaus sollte die Höhe der als Mindestprofiltiefenindikator wirkenden Rippe nicht geringer sein, als die Höhe der vorhandenen lokalen Profiltiefenindikatoren.

### Bezugsziffernliste

- 1: Laufstreifen
- 2, 2': Umfangsrille
- 3: Profilrippe
- 4: Rillenflanke
- 5: Rillengrund
- 6: Rippe
- 6a: Rippenflanke
- 6b: Indikatorfläche
- 7: Profiltiefenindikator
- a: Abstand
- b₁, b₂, b₃: Breite
- T: Tiefe

## Patentansprüche

1. Nutzfahrzeugreifen in Radialbauart mit einem Laufstreifen (1), welcher Umfangsrillen (2, 2') aufweist, deren Tiefe (T) der vorgesehenen Profiltiefe entspricht, welche von zwei einander gegenüberliegenden Rillenflanken (4) und einem diese verbindenden Rillengrund (5) begrenzt sind und mit einer Anzahl von über ihre Umfangserstreckung verteilten, lokalen Profiltiefenindikatoren (7) versehen sind, wobei zwei dieser Umfangsrillen schulterseitig verlaufende Umfangsrillen (2) sind,
wobei zumindest am Rillengrund (5) der schulterseitigen Umfangsrillen (2), seitliche Rillengrundabschnitte belassend, jeweils eine und über mindestens 90 % ihrer Umfangserstreckung verlaufende, einen weiteren Profiltiefenindikator bildende Rippe (6) vorgesehen ist, welche in den Rillengrund (5) übergehende Rippenflanken (6a) und an der Rippenoberfläche eine Indikatorfläche (6b) aufweist, wobei die lokalen Profiltiefenindikatoren (7) Anbindungen der Rippe (6) an zumindest eine der Rillenflanken (4) sowie das Niveau der Indikatorfläche (6b) aufweisende Verbreiterungen der Rippe (6) sind,
wobei jene Umfangsrillen (2), auf deren Rillengrund (5) eine derartige, einen weiteren Profiltiefenindikator bildende Rippe (6) verläuft, eine Breite (b₁) an der Laufstreifenperipherie von mindestens 8,0 mm aufweisen.

2. Nutzfahrzeugreifen nach Anspruch 1, **dadurch gekennzeichnet, dass** die Breite (b₂) der Indikatorfläche (6b) 30 % bis 70 % der Breite (b₃) der Umfangsrillen (2) am Niveau der Indikatorfläche (6b) beträgt.

3. Nutzfahrzeugreifen nach Anspruch 1 oder 2, **dadurch gekennzeichnet, dass** sich die Indikatorfläche (6b) der Rippe (6) zumindest am Niveau der Mindestprofiltiefe, insbesondere auf diesem Niveau, befindet.

4. Nutzfahrzeugreifen nach einem der Ansprüche 1 bis 3, **dadurch gekennzeichnet, dass** die lokalen Profiltiefenindikatoren (7) das Niveau der Mindestprofiltiefe wiedergeben.

5. Nutzfahrzeugreifen nach einem der Ansprüche 1 bis 4, **dadurch gekennzeichnet, dass** die Rippe (6) über die gesamte Umfangserstreckung der Umfangsrillen (2) verläuft.

6. Nutzfahrzeugreifen nach einem der Ansprüche 1 bis 5, **dadurch gekennzeichnet, dass** die lokalen Profiltiefenindikatoren (7) jeweils lokale Anbindungen der Rippe (6) an beide Rillenflanken (4) sind.

7. Nutzfahrzeugreifen nach einem der Ansprüche 1 bis 6, **dadurch gekennzeichnet, dass** die lokalen Profiltiefenindikatoren (7) über 10,0 mm bis 30,0 mm der Umfangserstreckung der Umfangsrillen (2) verlaufen.

8. Nutzfahrzeugreifen nach einem der Ansprüche 1 bis 7, **dadurch gekennzeichnet, dass** in jeder Umfangsrille (2) die Anzahl der lokalen Profiltiefenindikatoren (7) zumindest sechs beträgt.

9. Nutzfahrzeugreifen nach einem der Ansprüche 1 bis 8, **dadurch gekennzeichnet, dass** zusätzlich in zumindest einer mittleren Umfangsrille (2') am Rillengrund ein als Rippe ausgeführter Profiltiefenindikator vorgesehen ist.

## Claims

1. Commercial vehicle tyre of radial design with a tread (1) which has circumferential grooves (2, 2'), the depth (T) of which corresponds to the provided profile depth, which circumferential grooves (2, 2') are delimited by two groove flanks (4) which lie opposite one another and a groove base (5) which connects them, and are provided with a number of local profile depth indicators (7) which are distributed over their circumferential extent, two of these circumferential grooves being circumferential grooves (2) which run on the shoulder side, in each case one rib (6) which runs over at least 90% of their circumferential extent and forms a further profile depth indicator being provided at least on the groove base (5) of the shoulder-side circumferential grooves (2), retaining lateral groove base sections, which rib (6) has rib flanks (6a) which merge into the groove base (5) and an indicator surface (6b) on the rib surface, the local profile depth indicators (7) being attachments of the rib (6) to at least one of the groove flanks (4) and widened portions of the rib (6) which have the level of the indicator surface (6b), those circumferential grooves (2), on the groove base (5) of which a rib (6) of this type which forms a further profile depth indicator runs, having a depth (b₁) on the tread periphery of at least 8.0 mm.

2. Commercial vehicle tyre according to Claim 1, **characterized in that** the width (b₂) of the indicator surface (6b) is from 30% to 70% of the width (b₃) of the circumferential grooves (2) at the level of the indicator surface (6b).

3. Commercial vehicle tyre according to Claim 1 or 2, **characterized in that** the indicator surface (6b) of the rib (6) is situated at least at the level of the minimum profile depth, in particular at the said level.

4. Commercial vehicle tyre according to one of Claims 1 to 3, **characterized in that** the local profile depth indicators (7) represent the level of the minimum profile depth.

5. Commercial vehicle tyre according to one of Claims 1 to 4, **characterized in that** the rib (6) runs over the entire circumferential extent of the circumferential grooves (2).

6. Commercial vehicle tyre according to one of Claims 1 to 5, **characterized in that** the local profile depth indicators (7) are in each case local attachments of the rib (6) to the two groove flanks (4).

7. Commercial vehicle tyre according to one of Claims 1 to 6, **characterized in that** the local profile depth indicators (7) run over from 10.0 mm to 30.0 mm of the circumferential extent of the circumferential grooves (2).

8. Commercial vehicle tyre according to one of Claims 1 to 7, **characterized in that** the number of local profile depth indicators (7) is at least six in each circumferential groove (2).

9. Commercial vehicle tyre according to one of Claims 1 to 8, **characterized in that** a profile depth indicator which is configured as a rib is additionally provided on the groove base in at least one middle circumferential groove (2).

## Revendications

1. Pneumatique de véhicule utilitaire à structure radiale, comprenant une bande de roulement (1) qui présente des rainures circonférentielles (2, 2'), dont la profondeur (T) correspond à la profondeur de sculpture prévue et qui sont délimitées par deux flancs de rainure (4) opposés l'un à l'autre et un fond de rainure (5) qui les relie, et comprenant un nombre d'indicateurs de profondeur de sculpture locaux (7) répartis sur l'étendue circonférentielle de ladite bande, deux de ces rainures circonférentielles étant des rainures circonférentielles (2) s'étendant côté épaulement,
dans lequel au moins sur le fond de rainure (5) des rainures circonférentielles (2) côté épaulement, respectivement une nervure (6) s'étendant sur au moins 90 % de son étendue circonférentielle et formant un indicateur de profondeur de sculpture supplémentaire est prévue en réservant des parties de fond de rainure latérales, qui présente des flancs de nervure (6a) réalisant la transition au fond de rainure (5) et une surface d'indicateur (6b) sur la surface de nervure,
les indicateurs de profondeur de sculpture locaux (7) étant des raccordements de la nervure (6) à au moins l'un des flancs de rainure (4) ainsi que des élargissements, présentant la hauteur de la surface d'indicateur (6b), de la nervure (6),
dans lequel les rainures circonférentielles (2) sur le fond de rainure (5) desquelles s'étend une telle nervure (6) formant un indicateur de profondeur de sculpture supplémentaire présentent une largeur (b₁) d'au moins 8,0 mm au niveau de la périphérie de bande de roulement.

2. Pneumatique de véhicule utilitaire selon la revendication 1, **caractérisé en ce que** la largeur (b₂) de la surface d'indicateur (6b) est égale à 30 % à 70 % de la largeur (b₃) des rainures circonférentielles (2) à la hauteur de la surface d'indicateur (6b).

3. Pneumatique de véhicule utilitaire selon la revendication 1 ou 2, **caractérisé en ce que** la surface d'indicateur (6b) de la nervure (6) se trouve au moins près de la hauteur de la profondeur de sculpture minimale, en particulier à cette hauteur.

4. Pneumatique de véhicule utilitaire selon l'une quelconque des revendications 1 à 3, **caractérisé en ce que** les indicateurs de profondeur de sculpture locaux (7) représentent le niveau de la profondeur de sculpture minimale.

5. Pneumatique de véhicule utilitaire selon l'une quelconque des revendications 1 à 4, **caractérisé en ce que** la nervure (6) s'étend sur toute l'étendue circonférentielle des rainures circonférentielles (2).

6. Pneumatique de véhicule utilitaire selon l'une quelconque des revendications 1 à 5, **caractérisé en ce que** les indicateurs de profondeur de sculpture locaux (7) sont respectivement des raccordements locaux de la nervure (6) aux deux flancs de rainure (4).

7. Pneumatique de véhicule utilitaire selon l'une quelconque des revendications 1 à 6, **caractérisé en ce que** les indicateurs de profondeur de sculpture locaux (7) s'étendent sur 10,0 mm à 30,0 mm de l'étendue circonférentielle des rainures circonférentielles (2).

8. Pneumatique de véhicule utilitaire selon l'une quelconque des revendications 1 à 7, **caractérisé en ce que** dans chaque rainure circonférentielle (2), le nombre des indicateurs de profondeur de sculpture (7) locaux est au moins égal à six.

9. Pneumatique de véhicule utilitaire selon l'une quelconque des revendications 1 à 8, **caractérisé en ce qu'**en plus, un indicateur de profondeur de sculpture réalisé sous forme de nervure est prévu dans au moins une rainure circonférentielle centrale (2') sur le fond de rainure.
